# EUROPEAN PATENT SPECIFICATION

(11) **EP 4 491 467 B1**
(45) Date of publication and mention of the grant of the patent: **04.02.2026**
(21) Application number: 23185633.7
(22) Date of filing: 14.07.2023
(51) Int. Cl.: B60T 8/88, B60W 10/18, B60W 10/20, B60W 50/02, B60W 50/023, B60W 50/029, B62D 5/04

(54) **CONTROL SYSTEM CONFIGURED FOR CONTROLLING STEERING AND BRAKING OF A VEHICLE**
STEUERSYSTEM ZUR STEUERUNG DER LENKUNG UND BREMSUNG EINES FAHRZEUGS
SYSTÈME DE COMMANDE CONFIGURÉ POUR COMMANDER LA DIRECTION ET LE FREINAGE D'UN VÉHICULE

(43) Date of publication of application: 15.01.2025
(73) Proprietor: Volvo Car Corporation, 405 31 Göteborg (SE)
(72) Inventor: HANSSON, Anders, 40531 Göteborg (SE); TRAVAGLIATI, Alessandro, 40531 Göteborg (SE)
(74) Representative: Maiwald GmbH

(56) References cited:
- EP-A1- 2 765 045
- EP-A1- 3 584 140
- EP-A1- 4 116 779
- WO-A1-2019/224017
- DE-A1- 102006 062 300

## Description

### TECHNICAL FIELD

The present disclosure relates to a control system configured for controlling steering and braking of a vehicle, a vehicle comprising the control system, a method configured to be carried out by the control system, a computer program, and a computer-readable storage medium.

### BACKGROUND ART

In vehicles, different safety-relevant systems, such as steering systems and braking systems, are designed redundantly so that the systems are functioning even when they experience a fault. However, the cost of providing this redundancy is high because redundant elements are implemented in the vehicle for every system. EP4116779A1 describes a control system according to the preamble of claim 1.

### SUMMARY

The problem of high costs for redundancy-based safety-relevant systems in vehicles is at least partially solved or alleviated by the subject matter of the independent claims of the present disclosure, wherein further examples are incorporated in the dependent claims.

According to a first aspect, there is provided a control system configured for controlling steering and braking of a vehicle, the control system comprising an electronic steering control arrangement configured for electrical connection to at least one steering actuator of the vehicle and an electronic braking electronic arrangement configured for electrical connection to at least one braking actuator of the vehicle, the control system further comprising an electronic backup control arrangement configured for electrical connection to the at least one steering actuator and the at least one braking actuator.

By providing both types of actuators, namely steering and braking, with the electronic backup control arrangement, significant costs savings may be achieved, while a high safety may be guaranteed. The inventors have found that the particular configuration of one electronic backup control arrangement being configured for controlling the steering and braking actuators is a particularly viable option to reduce costs due to the similarity in their control, in particular in their control arrangements.

In particular, the electronic backup control arrangement being configured for electrical connection to the at least one steering actuator and the at least one braking actuator may be the only electronic backup control arrangement configured for electrical connection to both types of actuators. This is because it has been found by the inventors that the risk of both, the steering system and the braking system, experiencing a fault within a time restricted time span is very low. Accordingly, a single electronic backup control arrangement may suffice in the rare case of a fault to maneuver the vehicle into a safe location, when steering or braking should become malfunctioning, and the electronic backup control arrangement may bring back the function of the malfunctioning system, e.g., steering or braking. Then, in the safe location, e.g., at a road shoulder, the vehicle or driver may call for assistance and the control system may consequently be repaired before driving the vehicle any further.

An arrangement, such as the electronic steering control arrangement, being configured for electrical connection to another component as mentioned herein means that the respective arrangement may at least be configured for the electrical connection, e.g., by means of comprising connection means corresponding to the respective component, or be electrically connected to the component.

According to the invention the control system further comprises at least one steering switch electronically connected to the electronic steering control arrangement and the electronic backup control arrangement. The control system further comprises at least one braking switch electronically connected to the electronic braking control arrangement and electronic backup control arrangement. By means of the switches, it is easily possible to switch between the electronic steering control arrangement or electronic braking control arrangement and the electronic backup control arrangement in case of failure of any one of the electronic steering control arrangement and the electronic braking control arrangement.

According to the invention the control system comprises a fault monitor element connected at least to the at least one steering switch and the at least one braking switch. The fault monitor element is configured to switch the at least one steering switch from a receiving mode of receiving control signals from the electronic steering control arrangement or the at least one braking switch from a receiving mode of receiving control signals from the electronic braking control arrangement to a receiving mode of receiving control signals from the electronic backup control arrangement. The fault monitor may be further connected to several or all elements of the electronic steering control arrangement, e.g., steering bridge driver and/or steering bridge, and/or several or all elements of the electronic braking control arrangement, e.g., braking bridge driver and/or braking bridge.

In an example, the fault monitor element may be configured to switch the at least one steering switch and the at least one braking switch to the receiving mode of receiving control signals from the electronic backup control arrangement upon detection of a fault in the electronic steering control arrangement or the electronic braking control arrangement.

The fault monitor element may be implemented as hardware and/or software. For example, the fault monitor element may be implemented as a fault monitor application, in particular of a microcontroller of the control system or the vehicle. The fault monitor may be connected to further applications, such as a steering application and a braking application, which may also be carried out by the microcontroller, for example. Accordingly, the fault monitor may access the data from the steering application and/or the braking application, e.g., sensor measurements received by the respective applications, and evaluate whether the sensor measurements are reasonable. If not, the fault monitor may detect a fault in the electronic steering control arrangement or the electronic braking control arrangement. Following such fault detection, the microcontroller may switch the above-mentioned respective receiving mode of the at least one actuator of the faulty arrangement to the receiving mode where it receives its control signals from the electronic backup control arrangement.

In an example, the electronic steering control arrangement may comprise a steering bridge driver and a steering bridge. The electronic braking control arrangement may comprise a braking bridge driver and a braking bridge. Another word for a bridge driver is a gate driver. The bridge driver may be connected to the respective bridge for the purpose of controlling it.

In an example, each one of the bridge drivers may be configured for converting a control signal from a microcontroller of the control system into a control signal configured to be processed by each one of the bridges. Accordingly, the bridge drivers may serve the purpose of making the control signals from the microcontroller, which may be from the steering and braking application mentioned above, processable by the bridges in order to control the respective actuators.

In an example, each one of the bridges may comprise three or six or more transistors and the at least one steering actuator and the at least one braking actuator may be configured as a three or six phase electric motor. Additional transistors may be used to turn off the actuators completely if needed, e.g., in case of a short circuit. The transistors may be MOSFETs or IGBTs, for example.

In an example, the control signal from the microcontroller may be a PWM (pulse-width modulation) signal. The control signal configured to be processed by each one of the bridges may be an analogue signal.

In an example, the control system may comprise a microcontroller connected to the electronic steering control arrangement and the electronic braking control arrangement. As described above, the microcontroller may comprise a steering application and a breaking application as software. Upon execution of the steering application and breaking application, the microcontroller may generate respective control signals for steering and breaking and forward these, via the respective electronic control arrangements, to the respective actuators.

In an example, the control system may further comprise a sensor arrangement connected to the microcontroller, the sensor arrangement comprising at least one steering sensor and at least one braking sensor. Under normal steering and braking operation, the microcontroller, in particular by means of the steering and breaking application, based on the sensor measurements from the sensors, as a result of a driver input, generates the control signals for the respective actuators.

In an example, the control system may comprise at least two electronic steering control arrangements, each one being configured for electrical connection to one of at least two steering actuators, and/or the control system comprising at least two electronic braking control arrangements, each one being configured for electrical connection to one of at least two braking actuators. Accordingly, different actuators may be provided with separate electronic control arrangements. In the at least two steering actuators, there may be one for steering the front axle and the other one for steering the rear axle of the vehicle, for example. In the at least two braking actuators, there may be different ones for each brake of the vehicle, e.g., front right brake, front left brake, rear right brake and/or rear left brake.

According to a second aspect, there is provided a vehicle comprising the control system of the first aspect of this disclosure.

Besides the control system, the vehicle may of course comprise the further components mentioned herein, such as the at least one steering actuator, the at least one braking actuator, corresponding steering means, such as a steering wheel, and braking means, such as a brake pedal, as well as the herein mentioned sensor arrangement and microcontroller, for example.

According to a third aspect, there is provided a method configured to be carried out by the control system of the first aspect of this disclosure, the method comprising:
- detecting a fault in one of the electronic steering control arrangement and the electronic braking control arrangement,
- sending control signals to the at least one steering actuator or the at least one braking actuator, which is connected to the faulty electronic steering control arrangement and the electronic braking control arrangement, via the electronic backup control arrangement.

The method may be at least partly computer-implemented, and may be implemented in software or in hardware, or in software and hardware. Further, the method may be at least partially carried out by computer program instructions running on means that provide data processing functions. The data processing means may be a suitable computing means, such as a microcontroller. The data processing means or the computer, respectively, may comprise one or more of a processor, a memory, a data interface, or the like.

The method may of course comprise further steps as described herein. For example, the method may further comprise switching at least one of the switches as mentioned herein upon detection of the fault.

According to a fourth aspect, there is provided a computer program comprising instructions to cause the control system of the first aspect of this disclosure to execute the method of the second aspect of this disclosure.

According to a fifth aspect, there is provided a computer readable medium having stored thereon the computer program of the fourth aspect of this disclosure.

It should be noted that modifications are possible within the scope of the invention, as defined by the claims.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a control system;
- Figure 2: shows a schematic illustration of a vehicle comprising the control system of Fig. 1; and
- Figure 3: shows a schematic illustration of a method carried out by the control system of Fig. 1.

### DETAILED DESCRIPTION

The Figures are merely schematic representations and serve only to illustrate examples of the disclosure. Identical or equivalent elements are in principle provided with the same reference signs.

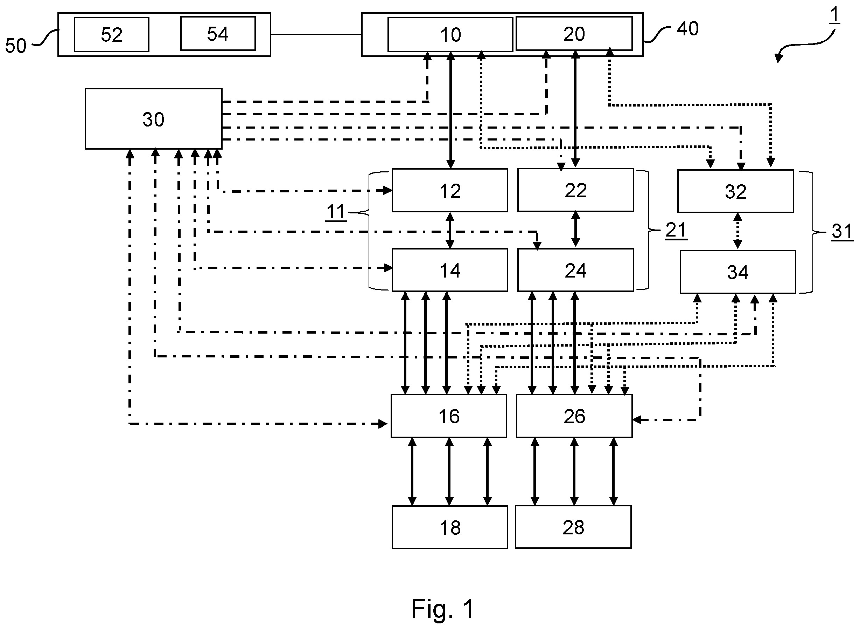

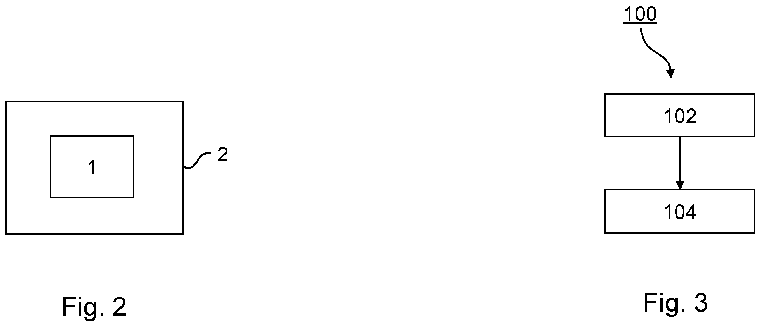

Figure 1 shows a control system 1, which is configured for controlling steering and braking of a vehicle 2. As shown in Figure 2, the control system 1 may be included in the vehicle 2. The vehicle 2 may be a car, in particular a passenger car, for example. The control system 1 may be configured as an electronic control unit or comprise an electronic control unit, for example.

The control system 1 comprises a steering system, components of which are generally referenced herein with a two-digit reference number starting with the number 1, and a braking system, components of which are generally referenced herein with a two-digit reference number starting with the number 2.

The control system 1 or vehicle 2 may further comprise a microcontroller 40, on which applications for steering and braking may be executed, which may be at least partially or fully software implemented, for example. Also, the control system 1 or vehicle 2 may further comprise a sensor arrangement 50, which may be connected to the microcontroller 40 and thereby receive sensor measurements from the sensor arrangement 50. The sensor arrangement 50 may comprise one or more steering sensors 52, such as, for example, a steering torque sensor, a motor position angle sensor and/or a hand wheel angle sensor. Similarly, the sensor arrangement 50 may comprise one or more braking sensors 54. The sensor arrangement 50 and/or the microcontroller 40 may be further connected to one or more transceivers for providing the sensor measurements to other systems (not shown) in the vehicle 2.

The steering system comprises the steering application 10 and an electronic steering control arrangement 11, which comprises a steering bridge driver 12 or, in other words, a gate driver and a steering bridge 14. The steering bridge 14 comprises several transistors in form of MOSFETs or IGBTs, for example. Further, the steering system comprises at least one steering switch 16 and at least one steering actuator 18.

The at least one steering actuator 18 may be an electric motor such as a 3 phase or 6 phase electric motor, for example. The at least one steering actuator 18 may be configured for steering the front and/or rear axle of the vehicle 2. Also, there may be two steering actuators 18, one for steering the front axle and the other one for steering the rear axle of the vehicle 2, for example. A steering switch 16 may be connected to each one of the steering actuators 18.

Under normal steering operation, the steering application 10, based on the sensor measurements from the at least one steering sensor 52, as a result of the driver input, generates control signals for the at least one steering actuator 18. These control signals may be PWM signals, for example. They are sent by the microcontroller 40 to the steering bridge driver 12, which converts the control signal from the microcontroller 40 into another form of control signal to be processed by the steering bridge 14, in particular an analogue signal. The transistors in the steering bridge 14 operate according to the control signal in the analogue signal form and thereby provide a control signal specifically adapted for operation of the at least one steering actuator 18 in the form of the electric motor.

The braking system comprises the braking application 10 and the electronic braking control arrangement 21, which comprises a braking bridge driver 22 and a braking bridge 24. The braking bridge 24 comprises several transistors in form of MOSFETs or IGBTs, for example. Further, the braking system comprises a braking switch 16 and at least one braking actuator 18.

The at least one braking actuator 18 may be an electric motor such as a 3 phase or 6 phase electric motor, for example. The at least one braking actuator 18 may be configured for braking a front right, front left, rear right and/or rear left brake of the vehicle 2. Also, there may be two or more braking actuators 18, wherein each one may be configured for braking one of the afore-mentioned brakes of the vehicle 2, for example. A braking switch 16 may be connected to each one of the braking actuators 18. The number of transistors may be equal to the number of phases of the electric motor.

Under normal braking operation, the braking application 10, based on the sensor measurements from the at least one braking sensor 54, as a result of a driver input, generates control signals for the at least one braking actuator 18. These control signals may be PWM signals, for example. They are sent by the microcontroller 40 to the braking bridge driver 22, which converts the control signal from the microcontroller 40 into another form of control signal to be processed by the braking bridge 24, in particular an analogue signal. The transistors in the braking bridge 24 operate according to the control signal in the analogue signal form and thereby provide a control signal specifically adapted for operation of the at least one braking actuator 18 in the form of the electric motor.

The control system 1 further comprises a fault monitor element 30, which may be implemented as hardware and/or software. For example, the fault monitor element 30 may be implemented as an application of the microcontroller 40 (not shown in Fig. 1). The fault monitor 30 is connected to the steering application 10 and the braking application 20. Accordingly, the fault monitor 30 may access the data from the steering application 10 and the braking application 20, e.g., the sensor measurements, and evaluate whether the sensor measurements are reasonable. If not, the fault monitor 30 may detect a fault in the steering system or the braking system, in particular in one of the bridge drivers 12, 22 and/or the bridges 14, 24 converting and forwarding the control signals from the microcontroller 40.

Besides the fault monitor element 30, the control system 1 comprises an electronic backup control arrangement 31 comprising a backup bridge driver 32 and a backup bridge 34. The fault monitor element 30 is connected to the backup bridge driver 32 and the backup bridge 34. Similarly, the fault monitor element 30 is connected to the steering bridge driver 12, the steering bridge 14, the braking bridge driver 22 and the braking bridge 24. The electronic backup control arrangement 31 is not being used under normal steering and braking operation of the vehicle 1. However, in case a fault in the steering system or the braking system occurs, the electronic backup control arrangement 31 of the control system 1 may be used for sending the control signals from the microcontroller to the respective actuator 18, 28, including the above-mentioned conversion of the control signal, thereby preventing that the steering and/or the braking of the vehicle 2 are malfunctioning in case of an error in any one of the bridge drivers 12, 22 and the bridges 14, 24.

Specifically, the electronic backup control arrangement 31 is electronically connected to the steering switch 16 and the braking switch 26. The steering switch 16 and the braking switch 26 may be switched between two receiving modes. In one of these two receiving modes, under normal operation, the switches 16, 26 receive their control signal from their respective bridges 14, 24. However, in case of a fault, the fault monitor element 30 switches, by means of sending a corresponding switch signal to the respective switch 16, 26, the receiving mode to receiving the control signal from the backup bridge 34. Also, the backup bridge driver 32 may be now provided with the control signal from the respective application 10, 20 of the microcontroller 40.

Thereby, in case of a fault of any one of the steering system and the braking system, the control system 1 has a single electronic backup control arrangement 31 of a backup bridge driver 32 and a backup bridge 34, which may take over the control signal conversion and forwarding to the respective actuator 18, 28 of the faulty system. Because the electronic backup control arrangement 31 can act as backup for both systems, the costs of the control system 1 is kept low. Specifically, because a parallel error of both, the braking and the steering system, is very unlikely, by providing a single electronic backup control arrangement 31, the costs for this backup solution is kept very low compared to providing a redundant configuration of bridge driver and bridge for both systems.

Figure 3 shows a method 100 carried out by the control system 1 as shown in Figs. 1 and 2. The method 100 comprises, in a step 102, the detection of a fault in one of the bridge drivers 12, 22 and the bridges 14, 24 of the steering system and the braking system by the fault monitor element 30.

The method 100 further comprises, in a step 104, the sending of control signals to the actuator 18, 28 of the faulty system via the electronic backup control arrangement 31.

The method 100 may further, prior to step 104, comprise the switching of the respective switch 16, 26, as explained above, upon detection of the fault.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: control system
- 2: vehicle
- 10: steering application
- 11: electronic steering control arrangement
- 12: steering bridge driver
- 14: steering bridge
- 16: steering switch
- 18: steering actuator
- 20: braking application
- 21: electronic braking control arrangement
- 22: braking bridge driver
- 24: braking bridge
- 26: braking switch
- 28: braking actuator
- 30: fault monitor element
- 31: electronic backup control arrangement
- 32: backup bridge driver
- 34: backup bridge
- 40: microcontroller
- 50: sensor arrangement
- 52: steering sensor
- 54: braking sensor
- 100: method
- 102, 104: steps

## Claims

1. A control system (1) configured for controlling steering and braking of a vehicle (2), the control system (1) comprising an electronic steering control arrangement (11) configured for electrical connection to at least one steering actuator (18) of the vehicle (2) and an electronic braking control arrangement (21) configured for electrical connection to at least one braking actuator (28) of the vehicle (2), the control system (1) further comprising an electronic backup control arrangement (31) configured for electrical connection to the at least one steering actuator (18) and the at least one braking actuator (28), the control system (1) further comprising at least one steering switch (16) electronically connected to the electronic steering control arrangement (11) and the electronic backup control arrangement (31), and the control system (1) further comprising at least one braking switch (26) electronically connected to the electronic braking control arrangement (21) and the electronic backup control arrangement (31), **characterized in that** the control system (1) comprises a fault monitor element (30) connected at least to the at least one steering switch (16) and the at least one braking switch (26), the fault monitor element (30) being configured to switch the at least one steering switch (16) from a receiving mode of receiving control signals from the electronic steering control arrangement (11) or the at least one braking switch (26) from a receiving mode of receiving control signals from the electronic braking control arrangement (21) to a receiving mode of receiving control signals from the electronic backup control arrangement (31).

2. The control system (10) of claim 1, the fault monitor element (30) being configured to switch the at least one steering switch (16) and the at least one braking switch (26) to the receiving mode of receiving control signals from the electronic backup control arrangement (31) upon detection of a fault in the electronic steering control arrangement (11) or the electronic braking control arrangement (21).

3. The control system (1) of any one of the previous claims, the electronic steering control arrangement (11) comprising a steering bridge driver (12) and a steering bridge (14) and the electronic braking control arrangement (21) comprising a braking bridge driver (22) and a braking bridge (24).

4. The control system (1) of claim 3, each one of the bridge drivers (12, 22) being configured for converting a control signal from a microcontroller (40) of the control system (1) into a control signal configured to be processed by each one of the bridges (14, 24).

5. The control system (1) of claim 3 or 5, each one of the bridges (14, 24) comprising three or six transistors and the at least one steering actuator (18) and the at least one braking actuator (28) being configured as a three or six phase electric motor.

6. The control system (1) of claim 4 or 5, the control signal from the microcontroller (40) being a PWM signal and the control signal configured to be processed by each one of the bridges (14, 24) being an analogue signal.

7. The control system (1) of any one of the previous claims, the control system (1) comprising a microcontroller (40) connected to the electronic steering control arrangement (11) and the electronic braking control arrangement (21).

8. The control system (1) of claim 7, the control system (1) further comprising a sensor arrangement (50) connected to the microcontroller (40), the sensor arrangement (50) comprising at least one steering sensor (62) and at least one braking sensor (64).

9. The control system (1) of any one of the previous claims, the control system (1) comprising at least two electronic steering control arrangements (11), each one being configured for electrical connection to one of at least two steering actuators (18), and/or the control system (1) comprising at least two electronic braking control arrangements (21), each one being configured for electrical connection to one of at least two braking actuators (18).

10. A vehicle comprising a control system (1) according to any one of the previous claims.

11. A method configured to be carried out by the control system (1) of any one of claims 1 to 9, the method comprising:
- detecting a fault in one of the electronic steering control arrangement (11) and the electronic braking control arrangement (21),
- sending control signals to the at least one steering actuator (18) or the at least one braking actuator (28), which is connected to the faulty electronic steering control arrangement (11) and the electronic braking control arrangement (21), via the electronic backup control arrangement (31).

12. A computer program comprising instructions to cause the control system of any one of claims 1 to 9 to execute the method of claim 11.

13. A computer-readable storage medium having stored thereon the computer program of claim 12.

## Patentansprüche

1. Ein Steuersystem (1), das zum Steuern der Lenkung und des Bremsens eines Fahrzeugs (2) konfiguriert ist, wobei das Steuersystem (1) eine elektronische Lenkungssteuereinrichtung (11), die zum elektrischen Anschluss an mindestens einen Lenkungsaktuator (18) des Fahrzeugs (2) konfiguriert ist, und eine elektronische Bremssteuereinrichtung (21) umfasst, die zum elektrischen Anschluss an mindestens einen Bremsaktuator (28) des Fahrzeugs (2) konfiguriert ist, wobei das Steuersystem (1) ferner eine elektronische Backup-Steuereinrichtung (31) umfasst, die für eine elektrische Verbindung mit dem mindestens einen Lenkaktuator (18) und dem mindestens einen Bremsaktuator (28) konfiguriert ist, wobei das Steuersystem (1) ferner mindestens einen Lenkungsschalter (16) umfasst, der elektronisch mit der elektronischen Lenkungssteuereinrichtung (11) und der elektronischen Backup-Steuereinrichtung (31) verbunden ist, und wobei das Steuersystem (1) ferner mindestens einen Bremsschalter (26) umfasst, der elektronisch mit der elektronischen Bremssteuereinrichtung (21) und der elektronischen Backup-Steueranordnung (31) verbunden ist, **dadurch gekennzeichnet, dass** das Steuersystem (1) ein Fehlerüberwachungselement (30) umfasst, das mindestens mit dem mindestens einen Lenkungsschalter (16) und dem mindestens einen Bremsschalter (26) verbunden ist, wobei das Fehlerüberwachungselement (30) so konfiguriert ist, dass es den mindestens einen Lenkungsschalter (16) aus einem Empfangsmodus zum Empfangen von Steuersignalen von der elektronischen Lenkungssteuereinrichtung (11) oder den mindestens einen Bremsschalter (26) aus einem Empfangsmodus zum Empfangen von Steuersignalen von der elektronischen Bremssteuereinrichtung (21) in einen Empfangsmodus zum Empfangen von Steuersignalen von der elektronischen Backup-Steuereinrichtung (31) schaltet.

2. Steuersystem (10) nach Anspruch 1, wobei das Fehlerüberwachungselement (30) so konfiguriert ist, dass es den mindestens einen Lenkungsschalter (16) und den mindestens einen Bremsschalter (26) in den Empfangsmodus zum Empfangen von Steuersignalen von der elektronischen Backup-Steuereinrichtung (31) schaltet, wenn ein Fehler in der elektronischen Lenkungssteuereinrichtung (11) oder der elektronischen Bremssteuereinrichtung (21) erkannt wird.

3. Steuersystem (1) nach einem der vorstehenden Ansprüche, wobei die elektronische Lenksteuereinrichtung (11) einen Lenkbrückentreiber (12) und eine Lenkbrücke (14) umfasst und die elektronische Bremssteuereinrichtung (21) einen Bremsbrückentreiber (22) und eine Bremsbrücke (24) umfasst.

4. Steuersystem (1) nach Anspruch 3, wobei jeder der Brückentreiber (12, 22) so konfiguriert ist, dass er ein Steuersignal von einem Mikrocontroller (40) des Steuersystems (1) in ein Steuersignal umwandelt, das so konfiguriert ist, dass es von jeder der Brücken (14, 24) verarbeitet werden kann.

5. Steuersystem (1) nach Anspruch 3 oder 5, wobei jede der Brücken (14, 24) drei oder sechs Transistoren umfasst und der mindestens eine Lenkaktuator (18) und der mindestens eine Bremsaktuator (28) als drei- oder sechsphasiger Elektromotor konfiguriert sind.

6. Steuersystem (1) nach Anspruch 4 oder 5, wobei das Steuersignal vom Mikrocontroller (40) ein PWM-Signal ist und das Steuersignal, das so konfiguriert ist, dass es von jeder der Brücken (14, 24) verarbeitet werden kann, ein analoges Signal ist.

7. Steuersystem (1) nach einem der vorhergehenden Ansprüche, wobei das Steuersystem (1) einen Mikrocontroller (40) umfasst, der mit der elektronischen Lenksteuereinrichtung(11) und der elektronischen Bremssteuereinrichtung (21) verbunden ist.

8. Steuersystem (1) nach Anspruch 7, wobei das Steuersystem (1) ferner eine mit dem Mikrocontroller (40) verbundene Sensoranordnung (50) umfasst, wobei die Sensoranordnung (50) mindestens einen Lenksensor (62) und mindestens einen Bremssensor (64) umfasst.

9. Steuersystem (1) nach einem der vorstehenden Ansprüche, wobei das Steuersystem (1) mindestens zwei elektronische Lenksteuereinrichtungen (11) umfasst, von denen jede für eine elektrische Verbindung mit einem von mindestens zwei Lenkaktuatoren (18) konfiguriert ist, und/oder wobei das Steuersystem (1) mindestens zwei elektronische Bremssteuereinrichtungen (21) umfasst, von denen jede für eine elektrische Verbindung mit einem von mindestens zwei Bremsaktuatoren (18) konfiguriert ist.

10. Fahrzeug mit einem Steuersystem (1) gemäß einem der vorstehenden Ansprüche.

11. Verfahren, das zur Durchführung durch das Steuersystem (1) nach einem der Ansprüche 1 bis 9 konfiguriert ist, wobei das Verfahren umfasst:
- Erkennen eines Fehlers in einer der elektronischen Lenksteuereinrichtungen (11) und der elektronischen Bremssteuereinrichtung (21),
- Senden von Steuersignalen an den mindestens einen Lenkaktuator (18) oder den mindestens einen Bremsaktuator (28), der mit der fehlerhaften elektronischen Lenksteuereinrichtung (11) und der elektronischen Bremssteuereinrichtung (21) verbunden ist, über die elektronische Backup-Steuerungsanordnung (31).

12. Computerprogramm, das Anweisungen umfasst, um das Steuersystem gemäß einem der Ansprüche 1 bis 9 zu veranlassen, das Verfahren gemäß Anspruch 11 auszuführen.

13. Computerlesbares Speichermedium, auf dem das Computerprogramm gemäß Anspruch 12 gespeichert ist.

## Revendications

1. Système de commande (1) configuré pour commander la direction et le freinage d'un véhicule (2), le système de commande (1) comprenant un dispositif de commande électronique de direction (11) configuré pour être connecté électriquement à au moins un actionneur de direction (18) du véhicule (2) et un dispositif de commande électronique de freinage (21) configuré pour être connecté électriquement à au moins un actionneur de freinage (28) du véhicule (2), le système de commande (1) comprenant en outre un dispositif de commande électronique de secours (31) configuré pour être connecté électriquement à au moins un actionneur de direction (18) et à au moins un actionneur de freinage (28), le système de commande (1) comprenant en outre au moins un commutateur de direction (16) connecté électroniquement au dispositif de commande électronique de direction (11) et au dispositif de commande électronique de secours (31), et le système de commande (1) comprenant en outre au moins un commutateur de freinage (26) connecté électroniquement au dispositif de commande de freinage électronique (21) et au dispositif de commande de secours électronique (31), **caractérisé en ce que** le système de commande (1) comprend un élément de surveillance de défaut (30) connecté au moins au moins un commutateur de direction (16) et au moins un commutateur de freinage (26), l'élément de surveillance de défaut (30) étant configuré pour commuter le au moins un commutateur de direction (16) d'un mode de réception de signaux de commande provenant du dispositif de commande de direction électronique (11) ou le au moins un commutateur de freinage (26) d'un mode de réception de signaux de commande provenant du dispositif de commande de freinage électronique (21) à un mode de réception de signaux de commande provenant du dispositif de commande de secours électronique (31).

2. Le système de commande (10) selon la revendication 1, l'élément de surveillance de défaut (30) étant configuré pour commuter le au moins un commutateur de direction (16) et le au moins un commutateur de freinage (26) vers le mode de réception de signaux de commande provenant du dispositif de commande électronique de secours (31) lors de la détection d'un défaut dans le dispositif de commande électronique de direction (11) ou le dispositif de commande électronique de freinage (21).

3. Le système de commande (1) de l'une quelconque des revendications précédentes, le dispositif de commande électronique de direction (11) comprenant un circuit d'attaque de pont de direction (12) et un pont de direction (14) et le dispositif de commande électronique de freinage (21) comprenant un circuit d'attaque de pont de freinage (22) et un pont de freinage (24).

4. Le système de commande (1) selon la revendication 3, chacun des pilotes de pont (12, 22) étant configuré pour convertir un signal de commande provenant d'un microcontrôleur (40) du système de commande (1) en un signal de commande configuré pour être traité par chacun des ponts (14, 24).

5. Le système de commande (1) selon la revendication 3 ou 5, chacun des ponts (14, 24) comprenant trois ou six transistors, et le au moins un actionneur de direction (18) et le au moins un actionneur de freinage (28) étant configurés comme un moteur électrique à trois ou six phases.

6. Le système de commande (1) selon la revendication 4 ou 5, le signal de commande provenant du microcontrôleur (40) étant un signal PWM et le signal de commande configuré pour être traité par chacun des ponts (14, 24) étant un signal analogique.

7. Le système de commande (1) de l'une quelconque des revendications précédentes, le système de commande (1) comprenant un microcontrôleur (40) connecté au dispositif de commande électronique de direction (11) et au dispositif de commande électronique de freinage (21).

8. Le système de commande (1) de la revendication 7, le système de commande (1) comprenant en outre un dispositif de capteurs (50) connecté au microcontrôleur (40), le dispositif de capteurs (50) comprenant au moins un capteur de direction (62) et au moins un capteur de freinage (64).

9. Le système de commande (1) de l'une quelconque des revendications précédentes, le système de commande (1) comprenant au moins deux dispositifs de commande électronique de direction (11), chacun étant configuré pour être connecté électriquement à l'un d'au moins deux actionneurs de direction (18), et/ou le système de commande (1) comprenant au moins deux dispositifs électroniques de commande de freinage (21), chacun étant configuré pour être connecté électriquement à l'un d'au moins deux actionneurs de freinage (18).

10. Véhicule comprenant un système de commande (1) selon l'une quelconque des revendications précédentes.

11. Procédé configuré pour être mis en œuvre par le système de commande (1) de l'une quelconque des revendications 1 à 9, le procédé comprenant :
- la détection d'un défaut dans l'un des dispositifs de commande électronique de direction (11) et le dispositif de commande électronique de freinage (21),
- l'envoi de signaux de commande à au moins un actionneur de direction (18) ou à au moins un actionneur de freinage (28), qui est connecté au dispositif de commande électronique de direction (11) défectueux et au dispositif de commande électronique de freinage (21), via le dispositif de commande électronique de secours (31).

12. Programme informatique comprenant des instructions pour amener le système de commande de l'une quelconque des revendications 1 à 9 à exécuter le procédé de la revendication 11.

13. Support de stockage lisible par ordinateur sur lequel est stocké le programme informatique selon la revendication 12.
